# EUROPÄISCHE PATENTANMELDUNG

(11) **EP 4 653 629 A1**
(43) Veröffentlichungstag der Anmeldung: **26.11.2025**
(21) Anmeldenummer: 25177865.0
(22) Anmeldetag: 21.05.2025
(51) Int. Cl.: E04B 1/80, F16L 59/065

(54) **VAKUUMISOLATIONSPANEEL MIT REDUZIERTER BRANDLAST**

(30) Priorität: 23.05.2024 DE 102024114445
(71) Anmelder: va-Q-tec Thermal Solutions GmbH, 97080 Würzburg (DE)
(72) Erfinder: Gralla, Sebastian, 97082 Würzburg (DE); Rottenbacher, Kenny, 97072 Würzburg (DE); Kuhn, Joachim, 97074 Würzburg (DE)
(74) Vertreter: Gleim Petri Patent- und Rechtsanwaltspartnerschaft mbB

(57) **Zusammenfassung**

Vakuumisolationspaneel mit reduzierter Brandlast umfassend ein Kernmaterial und einer Hülle, wobei das Kernmaterial ein Silikatgemisch umfassend pyrogenes Siliciumdioxid und ein Trübungsmittel umfasst, wobei das Trübungsmittel Magnetit ist.

## Beschreibung

Die Erfindung betrifft ein Vakuumisolationspaneel mit reduzierter Brandlast.

Die Verwendung von Vakuumisolationspaneelen bei der Wärmedämmung von Gebäuden ist heutzutage zunehmend verbreitet. Ein Vakuumisolationspaneel besteht dabei aus einem Stützkern, welcher mit luftdichter Folie ummantelt ist. Das so entstehende Paneel wird vakuumiert, wodurch es seine Wärmedämmleistung und seine Stabilität erhält.

Vakuumisolationspaneele weisen dabei mit einer Wärmeleitfähigkeit von 4,3 bis 7 mW/(mK) eine hohe Dämmleistung im Vergleich zu anderen auf dem Markt verfügbaren Dämmstoffen. Durch diese hohe Dämmleistung reicht schon eine vergleichsweise dünne Schicht, um die erwünschte Dämmung in Wand, Boden oder Decken zu erreichen. Das macht die Dämmung mit Vakuumisolationspaneelen vor allem im urbanen Raum beliebt, in welchen nutzbarer Raum besonders begehrt und kostbar ist.

Dabei haben Vakuumisolationspaneele jedoch den Nachteil, dass sie im Vergleich zu einigen heute gängigen Dämmstoffen wie Mineralwolle und Schaumglas leichter brennbar sind. In Deutschland sind jedoch in Gebäuden mit einer Höhe ab 22 m so nur Dämmstoff der Brandklasse A zugelassen. Das bedeutet nach der DIN EN 13501, dass das Gesamtprodukt einen PCS-Grenzwert von 3,0 MJ/kg nicht überschreiten darf. Der PCS-Wert gibt dabei die Energiemenge an, die bei der vollständigen Verbrennung des Materials frei wird.

Vakuumisolationspaneele sind hingegen zumeist in Brandklasse E einzuordnen. Durch besondere Modifikationen wurde Brandklasse B erreicht. Dennoch bedeutet dies, dass Vakuumisolationspaneelen bei der Gebäudedämmung in Hochhäusern ab einer Höhe von 22 m nicht zuglassen sind und mit weniger platzsparenden Dämmstoffen wie Mineralwolle und Schaumglas ersetzt werden müssen.

Es ist daher Aufgabe der Erfindung die Nachteile im Stand der Technik zu überwinden und insbesondere ein Vakuumisolationspaneel bereit zu stellen, welches die Anforderungen für Brandklasse A erfüllt und somit auch in Hochhäusern zur Wärmedämmung zugelassen ist.

Diese Aufgabe wird durch ein Vakuumisolationspaneel mit reduzierter Brandlast gemäß des unabhängigen Anspruchs erfüllt. Vorteilige Ausführungen bilden den Gegenstand der abhängigen Unteransprüche.

Die Erfindung umfasst ein Vakuumisolationspaneel mit reduzierter Brandlast umfassend ein Kernmaterial einer Hülle und einer auf die Hülle aufgebrachten (luft- und gasdichten) Abdichtungsschicht zum Einschließen von in einem Brandfall entstehenden brennbaren Gasen im Inneren des Vakuumisolationspaneels. Das Kernmaterial umfasst ein Silikatgemisch umfassend pyrogenes Siliciumdioxid und ein Trübungsmittel, wobei das Trübungsmittel Magnetit ist. Durch die Verwendung von Magnetit kann die Brandlast des Kernmaterials bedeutend gesenkt werden. Tauscht man das sonst häufig verwendete Trübungsmittel SiC mit Magnetit im Silikatgemisch, kann der PCS- Wert bei gleichbleibenden Anteil auf ein Drittel gesenkt werden, sodass der PCS-Wert des gesamten Vakuumisolationspaneels die Anforderungen von Brandklasse A2 erfüllen und somit auch in Hochhäusern zur Wärmedämmung zugelassen sind.

Bevorzugt weist das Kernmaterial eine Flächendichte unter 4000 g/m², bevorzugt in einem Bereich von 3000 g/m² bis 4000 g/m². Durch eine geringere Dichte kann die Wärmeleitfähigkeit von Vakuumisolationspaneelen reduziert werden. Auch der flächenspezifische PCS-Wert lässt sich mit einer geringeren Dichte reduzieren.

Gemäß eines weiteren bevorzugten Aspekts hat das pyrogenes Siliciumdioxid einen Anteil von 50 % bis 95 %, bevorzugt von 65 % bis 85 % und das Magnetit einen Anteil von 5 % bis 40 %, bevorzugt von 15 % bis 25 % am Kernmaterial hat. Durch den gewählten Anteil von Magnetit kann die Wärmeleitung des Vakuumisolationspaneels reduziert werden.

Vorteilhafterweise umfasst das Kernmaterial Getter- und Trocknermaterialien. Getter- und Trocknermaterialien nehmen über die Zeit in das Vakuumisolationspaneel eindiffundierende Luft und Feuchtigkeit auf und können so die Lebensdauer von Vakuumisolationspaneelen verlängern.

Bevorzugt ist das Kernmaterial frei von Kunststofffasern. Diese verbessern sonst die Stabilität von Vakuumisolationspaneelen, sind jedoch eine brennbare Komponente. Durch Verwendung von einer nicht brennbaren Komponente wie beispielsweise Glasfasern kann der Brennwert des Vakuumisolationspaneels gesenkt und die Stabilität erhalten werden.

Ebenso bevorzugt umfasst die Hülle Komponenten aus PET, LDPE, Polyurethan-Klebstoffe, Aluminium oder Glasfasergewebe mit einem PCS-Wert in einem Bereich zwischen 0 und 50 MJ/kg umfasst. Damit die Hülle den Anforderungen von Brandklasse A2 genügt, muss sie dabei derart aus den Materialien zusammengesetzt sein, sodass ihr flächenspezifisches PCS-Wert 4,0 MJ/m² nicht überschreitet.

Gemäß eines vorteilhaften Aspekts umfasst die Hülle eine Barrierefolie, wobei die Barrierefolie eine bis drei mit je einer Metallschicht bedampfen PET-Schichten umfasst, sodass die Barrierefolie einen PCS-Wert von bis zu 4 MJ/m², bevorzugt zwischen 2 MJ/m² und 3 MJ/m² aufweist. Die Barrierefolie soll das Vakuum im Inneren des Vakuumisolationspaneels aufrecht erhalten, indem sie Luft und Feuchtigkeit nicht eindringen lässt. Durch die Verwendung von nur bis zu zwei metallbedampften PET-Schichte anstelle häufig verwendeter drei Schichten, kann der Brennwert des Vakuumisolationspaneels gesenkt werden, indem PET eingespart wird. Durch verbesserte Barrierewirkung der einzelnen Schichten und Verwendung Getter- und Trocknermaterialien im Kernmaterial kann die Langlebigkeit von Vakuumisolationspaneelen erhalten bleiben.

Bevorzugt umfasst die Hülle ein flächiges Filterelement, bevorzugt ein polymerfreies flächiges Filterelement, besonders bevorzugt ein flächiges Filterelement aus Glasfasergewebe, mit einem Flächengewicht von unter 200 g/m², sodass das Filterelement einen PCS-Wert von bis zu 0,5 MJ/m², bevorzugt zwischen 0,005 MJ/m² und 0,05 MJ/m² aufweist. Das Filterelement verhindert, dass Staub vom Kernmaterial in die Siegelnaht der Barrierefolie gerät und stellt damit die Dichtheit der Barrierefolie sicher. Bei Verwendung von Glasfaser als Filterelement ist die Brandlast geringer als bei polymerhaltigen Filterelementen. Um die Brandlast weiterhin zu senken ist es zudem auch denkbar gänzlich auf das Filterelement zu verzichten.

Vorteilhafterweise umfasst die Hülle eine Siegelschicht, wobei die Siegelschicht ein Kunststoff mit einem Flächengewicht von unter 50 g/m², bevorzugt unter 35 g/m² umfasst, sodass die Siegelschicht einen PCS-Wert unter 4 MJ/m², bevorzugt zwischen 1 MJ/m² und 2 MJ/m² aufweist. Die Siegelschichtdient dient dazu die Hülle des Vakuumisolationspaneels vakuumdicht zu verschließen. Sie besteht zumeist aus einem thermoplastischen Kunststoff, zum Beispiel LDPE, also einem Material mit hohem Beitrag zu Brandlast. Durch Reduzierung der Dicke der Siegelschicht kann so die Brandlast des Vakuumisolationspaneels effektiv reduziert werden, wobei bedacht werden muss, dass bei reduzierter Siegeldicke die Dichtheit der Hülle beeinflusst werden kann.

Bevorzugt ist die die Abdichtungsschicht ein Material umfasst, wobei das Material anorganisches Material wie auf Wasserglas basierte Kunststoffe oder organisches Material wie schwer entflammbare Kunststoffe ist. Ferner kann das Material auch ein Silikon sein. Auch eine Mischung von organischen und anorganischen Materialien ist als Material für die Abdichtungsschicht denkbar. Das Material hat mindestens Brandklasse B nach EN 13501. Die Abdichtschicht wird in flüssiger Form auf das Vakuumisolationspaneel appliziert, zum Beispiel durch Pinsel, Streichen, Sprühen, Gießen oder Tauchen. Im getrockneten Zustand bildet sich dann eine luftdichte Barriere.

Vorteilhafterweise umfasst die Abdichtungsschicht Füllstoffe, welche Füllstoffe das Material aufschäumen oder Wasser oder Löschgase in einem Brandfall freisetzen. Die intumeszierenden Füllstoffe können auch organisch sein. Sie ermöglichen außerdem eine schnellere Trocknung der Abdichtungsschicht.

Gemäß einem vorteilhaften Aspekt weist die Abdichtungsschicht ein Flächengewicht von 20 g/m² bis 200 g/m², bevorzugt 80 g/m² bis 120 g/m² im getrockneten Zustand auf. Bei diesem Flächengewicht ergibt sich eine Dicke, welche ausreicht um eine luftdichte Barriere auszubilden.

Gemäß einem bevorzugten Aspekt umfasst das Vakuumisolationspaneel ferner eine Trägerschicht für die Abdichtungsschicht. Die Trägerschicht besteht beispielsweise aus Glasfasergewebe oder anderem nicht wasserabweisenden Material. Vorteilhafterweise ist die Abdichtungsschicht innen oder außen liegend an der Hülle aufgebracht. Ist sie außen aufgebracht, so werden auch die Kunststoffe der Barrierefolie miteingeschlossen.

Bevorzugt weist das Vakuumisolationspaneel eine Dichte von 160 g/m³ bis 250 g/m³ auf. Je nach Maß und Zusammensetzung eines Vakuumisolationspaneels ändert sich sowohl dessen Dichte als auch Dämmwirkung und Brandlast.

Im Folgenden wird die Erfindung anhand der in den Zeichnungen dargestellten Beispielen näher beschrieben und erläutert. Die der Beschreibung und den Zeichnungen zu entnehmenden Merkmale können einzeln für sich oder zu mehreren in beliebiger Kombination erfindungsgemäß angewandt werden.

Es zeigen
- Fig. 1: schematische Darstellung eines erfindungsgemäßen Vakuumisolationspaneels;
- Fig. 2a: detaillierte Darstellung des Aufbaues der Hülle des Vakuumisolationspaneels; und
- Fig. 2b: detaillierte Ansicht des Kernmaterials des Vakuumisolationspaneels.

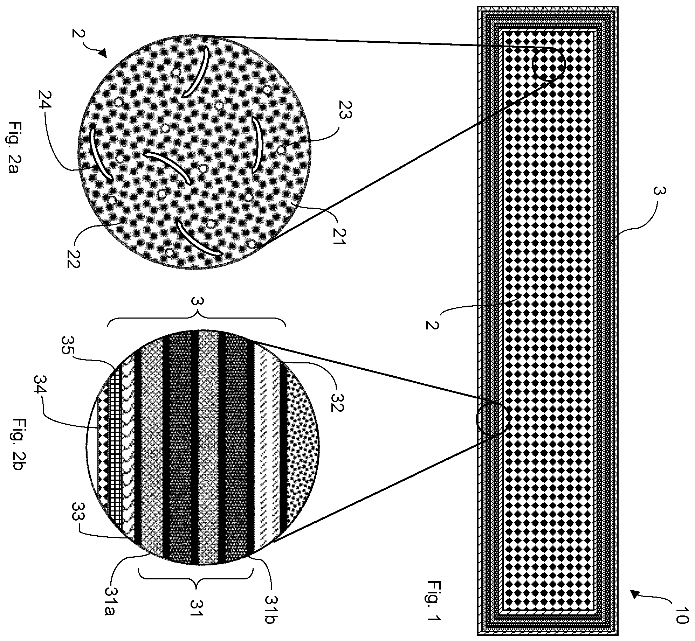

In **Fig. 1** ist ein erfindungsgemäßes Vakuumisolationspaneel 10 schematisch dargestellt. Das Vakuumisolationspaneel 10 umfasst ein Kernmaterial 2, welches von einer mehrschichtigen Hülle 3 umschlossen ist. Das Kernmaterial 2 weist eine Flächendichte unter 4000 g/m², bevorzugt in einem Bereich von 3000 g/m² bis 4000 g/m² auf. Denkbar ist auch eine Flächendichte von 3000 g/m² bis 4000 g/m² je 20 mm Paneeldicke.

Das Innere des Vakuumisolationspaneels 10 wird evakuiert und das Vakuum durch die Hülle 3 geschützt. Das Kernmaterial 2 stützt dabei einerseits die Hülle 3 und absorbiert zusätzlich Wärmestrahlung.

**Fig. 2a** zeigt eine detaillierte Darstellung des Kernmaterials 2. Das Kernmaterial 2 besteht aus einem Silikatgemisch, welches pyrogenes Siliciumdioxid 21 als Basis hat. Dem zugemischt sind dabei Trübungsmittel, unter anderem Magnetit 22, sowie Getter- und Trocknermaterialien 23. Zusätzlicher Bestandteil sind Fasern 24 zur Stabilisierung des Kernmaterials 3. Die Fasern 24 sind in der hier dargestellten Ausführung Glasfasern 24.

Das Silikatgemisch ist geeignet dazu, dem Luftdruck, welcher nach der Evakuierung auf das Vakuumisolationspaneel 10 wirkt, standzuhalten. Gleichzeitig haben die verwendeten Materialien eine geringe Wärmeleitfähigkeit. Das Trübungsmittel, hier Magnetit 22, absorbiert und reflektiert Infrarotstrahlung, wodurch der Wärmetransport weiterhin gesenkt wird. Zusätzlich hat Magnetit den Vorteil einer kleineren Brandlast als sonst häufig verwendete Trübungsmittel wie beispielsweise Siliziumcarbid. Trockner- und Gettermaterialien 23 binden Feuchtigkeit und Luft, welche mit der Zeit durch die Hülle 3 in das Innere des Vakuumisolationspaneels 10 eindringen. Somit verlängern sie dessen Lebensdauer, indem sie einen Druckanstieg im Vakuumisolationspaneel 10 hinauszögern. Die Glasfasern 24 sorgen für erhöhte Stabilität des Kernmaterials 2 und sind eine Alternative mit niedrigerer Brennlast zu häufig vorkommenden Viskosefasern.

In **Fig. 2b** ist eine vergrößerte Ansicht der Hülle 3 und deren einzelnen Lagen gezeigt. Die Hülle 3 besteht in diesem Beispiel von innen nach außen aus einem flächigen Filterelement 32, einer Abdichtungsschicht 34, einer Barrierefolie 31 und einer Siegelschicht 33. In dieser Ausführung befindet sich die Siegelschicht 33 auf der äußeren Seite der Barrierefolie 31, doch auch eine Anordnung an der Innenseite der Barrierefolie 31 sowie eine abschnittsweise Anordnung an Innen- und/oder Außenseite ist denkbar. Die verschiedenen Lagen bestehen dabei aus PET, LDPE, Polyurethan-Klebstoffe, Aluminium oder Glasfasergewebe. Die Dicke der einzelnen Schichten spiegelt die realen Schichtdicken und deren Verhältnis zueinander und dem Kernmaterial nicht wider.

Die Barrierefolie 31 dient dazu, das Vakuumisolationspaneel 10 luftdicht zu umschließen und das Vakuum im Inneren des Vakuumisolationspaneels 10 zu schützen. Sie ist in dieser Ausführungsform aufgebaut aus zwei mit Aluminium 31b bedampften PET-Schichten 31a.

Das Filterelement 32 ist aus Glasfasergewebe gefertigt. Es dient dazu, die Barrierefolie 31 während der Versiegelung vor Staub aus dem Kernmaterial 2 zu schützen und so eine möglichst dichte Versiegelung zu ermöglichen. Die Verwendung von Glaswolle anstatt eines häufig verwendeten Kunststoffvlieses führt zu einer reduzierten Brandlast.

Die Siegelschicht 33 besteht aus einem thermoplastischen Kunststoff und trägt einen großen Beitrag zur Brandlast des Vakuumisolationspaneels 10. Mit der Siegelschicht 33 wird die Hülle des Vakuumisolationspaneels 10 luftdicht verschlossen. Dies geschieht durch Erhitzen des thermoplastischen Kunststoffs, sodass dieser schmilzt und eine Siegelnaht bildet.

Die Abdichtungsschicht 34 umfasst ein Material, wobei das Material größtenteils anorganisches Material wie Wasserglas und/oder organisches Material umfasst. Die Abdichtungsschicht 34 enthält zudem Füllstoffe, welche Füllstoffe das Material aufschäumen und/oder Wasser und/oder Löschgase in einem Brandfall freisetzen. Im getrockneten Zustand bildet die Abdichtungsschicht eine luftdichte Barriere mit einem Flächengewicht von 100 g/m³, die im Brandfall durch die Zersetzung der Kunststoffe im Vakuumisolationspaneel entstehenden brennbaren Gase innerhalb des VIPs einschließt. In dieser Ausführungsform ist die Abdichtungsschicht 34 von außen an die Hülle 3 aufgebracht worden. Dazu weist das Vakuumisolationspaneel 10 eine Trägerschicht 35 aus Glasfasergewebe auf, an welcher die Abdichtungsschicht 34 angeordnet ist.

Ein erfindungsgemäßes Vakuumisolationspaneel 10 weist eine Dichte von 160 g/m³ bis 250 g/m³ auf. Es ist gezeigt, dass der PCS-Grenzwert von 3,0 MJ/kg zur Erfüllung der Brandklasse A2 erfüllt ist.

## Patentansprüche

1. Vakuumisolationspaneel (10) mit reduzierter Brandlast umfassend ein Kernmaterial (2) einer Hülle (3) und auf die Hülle (3) aufgebrachten Abdichtungsschicht (34) zum Einschließen von in einem Brandfall entstehenden brennbaren Gasen im Inneren des Vakuumisolationspaneels (10) wobei das Kernmaterial (2) ein Silikatgemisch umfassend pyrogenes Siliciumdioxid (21) und ein Trübungsmittel (22) umfasst, wobei das Trübungsmittel (22) Magnetit ist.

2. Vakuumisolationspaneel (10) nach Anspruch 1, wobei das Kernmaterial (2) eine Volumendichte unter 4000 g/m², bevorzugt in einem Bereich von 3000g/m² bis 4000 g/m² aufweist.

3. Vakuumisolationspaneel (10) nach Anspruch 1 oder 2, wobei das pyrogenes Siliciumdioxid (21) einen Anteil von 50 % bis 95 %, bevorzugt 65 % bis 85 % und das Magnetit (22) einen Anteil von 5 % bis 40 %, bevorzugt 15 % bis 25% am Kernmaterial (2) hat.

4. Vakuumisolationspaneel (10) nach einem der vorhergehenden Ansprüche, wobei das Kernmaterial (2) Getter- und Trocknermaterialien (23) umfasst.

5. Vakuumisolationspaneel (10) nach einem der vorhergehenden Ansprüche, wobei das Kernmaterial (2) frei von Kunststofffasern ist.

6. Vakuumisolationspaneel (10) nach einem der vorhergehenden Ansprüche, wobei die Hülle (3) Komponenten aus PET, LDPE, Polyurethan-Klebstoffe, Aluminium oder Glasfasergewebe mit einem PCS-Wert in einem Bereich zwischen 0 und 50 MJ/kg umfasst.

7. Vakuumisolationspaneel (10) nach einem der vorhergehenden Ansprüche, wobei die Hülle (3) eine Barrierefolie (31) umfasst, wobei die Barrierefolie (31) eine bis drei mit je einer Metallschicht (31b) bedampfen PET-Schichten (31a) umfasst, sodass die Barrierefolie (31) einen PCS-Wert von bis zu 4 MJ/m², bevorzugt zwischen 2 MJ/m² und 3 MJ/m² aufweist.

8. Vakuumisolationspaneel (10) nach einem der vorhergehenden Ansprüche, wobei die Hülle (3) ein flächiges Filterelement (32), bevorzugt ein polymerfreies flächiges Filterelement (32), besonders bevorzugt ein flächiges Filterelement (32) aus Glasfasergewebe, mit einem Flächengewicht von unter 200 g/m² umfasst, sodass das Filterelement (32) einen PCS-Wert von bis zu 0,5 MJ/m², bevorzugt zwischen 0,005 MJ/m² und 0,05 MJ/m² aufweist.

9. Vakuumisolationspaneel (10) nach einem der vorhergehenden Ansprüche, wobei die Hülle (3) eine Siegelschicht (33) umfasst, wobei die Siegelschicht (33) ein Kunststoff mit einem Flächengewicht von unter 50 g/m², bevorzugt unter 35 g/m², umfasst, sodass die Siegelschicht (33) einen PCS-Wert unter 4 MJ/m², bevorzugt zwischen 1 MJ/m² und 2 MJ/m² aufweist.

10. Vakuumisolationspaneel (10) nach einem der vorhergehenden Ansprüche, wobei die Abdichtungsschicht (34) ein Material umfasst, wobei das Material anorganisches Material wie auf Wasserglas basierte Kunststoffe oder organisches Material wie nicht brennbare Kunststoffe ist.

11. Vakuumisolationspaneel (10) nach Anspruch 10, wobei die Abdichtungsschicht (34) Füllstoffe umfasst, welche Füllstoffe das Material aufschäumen oder Wasser oder Löschgase in einem Brandfall freisetzen.

12. Vakuumisolationspaneel (10) nach einem der vorhergehenden Ansprüche, wobei die Abdichtungsschicht (34) ein Flächengewicht von 20 g/m² bis 200 g/m², bevorzugt 80 g/m² bis 120 g/m² aufweist.

13. Vakuumisolationspaneel (10) nach einem der vorhergehenden Ansprüche ferner umfassend einer Trägerschicht (35) für die Abdichtungsschicht.

14. Vakuumisolationspaneel (10) nach einem der vorhergehenden Ansprüche, wobei die Abdichtungsschicht (34) innen oder außen liegend an der Hülle (3) aufgebracht ist.

15. Vakuumisolationspaneel (10) nach einem der vorhergehenden Ansprüche, wobei das Vakuumisolationspaneel (10) eine Dichte von 160 g/m³ bis 250 g/m³ aufweist.
